# EUROPÄISCHE PATENTANMELDUNG

(11) **EP 3 939 946 A1**
(43) Veröffentlichungstag der Anmeldung: **19.01.2022**
(21) Anmeldenummer: 20185524.4
(22) Anmeldetag: 13.07.2020
(51) Int. Cl.: C04B 20/02, C04B 28/02, C04B 28/14

(54) **BAUSTOFFMISCHUNG**

(71) Anmelder: Oberender, Alfred, 71665 Vaihingen/Enz (DE); Schneider, Christa, 95336 Mainleus (DE)
(72) Erfinder: OBERENDER, Alfred, 71665 Vaihingen/Enz (DE)
(74) Vertreter: Jeck, Anton

(57) **Zusammenfassung**

Die vorliegende Erfindung betrifft eine Mörtelmischung beinhaltend ein anorganisches mineralisches Bindemittel, eine anorganische Körnung und ein organisches Additiv, wobei das Bindemittel Gips, Kalk oder Zement, die Körnung zerkleinertes Glas und dass das Additiv Cellulose, Fette, Zucker und andere Störstoffe sind.

## Beschreibung

Die Erfindung betrifft eine Mörtelmischung gemäß dem Oberbegriff des Anspruchs 1.

Eine Mörtelmischung, wie sie üblicherweise verwendet wird, weist mindestens ein Bindemittel wie beispielsweise Zement, Kalk und/oder Gips, eine Gesteinskörnung sowie Wasser und gegebenenfalls noch ein oder mehrere Additive auf, welche die physikalischen Eigenschaften der Mörtelmischung verbessern.

Nachteilig bei der Gewinnung, Herstellung und Verwendung von Gesteinskörnungen ist der zunehmend starke Eingriff in die Natur und deren Ausbeutung, die zu einer baldig zu erwartenden Erschöpfung der Ressourcen führt, der vergleichsweise hohe Aufwand, der zu deren Herstellung aus dem gewonnenen Gesteinsmaterial aufgebracht werden muss und das Fehlen inhärenter (anhaftender) Eigenschaften, welche die Zugabe von Additiven erforderlich macht.

In Zeiten zunehmender Rohstoffknappheit und einem immer größer werdenden Aufwand zur Gewinnung von Rohstoffen rückt die Verwendung von Recycling-Material immer mehr in den Vordergrund. Gerade in der Bauwirtschaft unter Berücksichtigung der aktuellen Gesetzgebung ist das Ziel die Recyclingquote zu erhöhen. Dies soll nicht nur durch die gesteigerte Wiederverwendung alter Baumaterialien, sondern auch durch Verwendung von Materialien aus anderen Industrie- / Recyclingbereichen erreicht werden.

Das Ziel dieser Erfindung ist die Verwendung von Recyclingmaterial/ Körnungen für Mörtel als Alternative zu Gesteinskörnungen.

Diese Aufgabe wird durch die Merkmale des Anspruchs 1 gelöst. Dabei beinhaltet die Mörtelmischung Gips als Bindemittel, zerkleinertes Glas als Körnung und Cellulose als Additiv.

Altglas ist ein gesammelter Abfallstoff aus unterschiedlichen Einsatzbereichen (z.B. Behälterglas, Flachglas, Industrieglas, techn. Glas, Spezialglas, usw.), der in bestimmten Glasaufbereitungsanlagen recycelt also für eine Wiedereinschmelzung und Neuglasgewinnung sortiert und ggf. auch gereinigt wird.

Restglas (Recycling-Abfallglas) ist in dieser Unterlage definiert als das beim Recyclingprozess zerkleinerte Glasmaterial, das nach der Altglasaufbereitung (Altglas-Recycling) heute in den Glasaufbereitungsanlagen nicht mehr in den Glasschmelzöfen zur Herstellung von Neuglas kommt (= kleinste Glaspartikel bis zu Staubgröße (Feinkorn bis Glassand/-grieß und Mehlkorn), KSP (Keramik-, Steine- und Porzelananteile), Organikanteile, Metalle, Kunststoffe und andere Störstoffe), da dieses Material den Schmelzprozess und die Qualität des Glases negativ beeinflussen würden). Nach heutigem Stand der Altglasaufbereitungstechnik wäre eine weitere Altglasaufbereitung entweder techn. nicht mehr möglich oder zu kostenintensiv (geringe Recyclingglasgewinnung bei hohem techn. und zeitlichem Aufwand).

Dieses Restglas wird entweder anderen Alternativverwertungen (z.B. Schaumglasindustrie) oder einer finalen Entsorgung (Deponie oder thermische Entsorgung) zugeführt.

Das im Rahmen der Glasaufbereitung durch Recycling wiedergewonnene "aufbereitete Altglas" wird dem Glasschmelzprozess wieder zugeführt um neue Glasprodukte herzustellen. Es wäre auch theoretisch möglich dieses Glas alternativ in den Mörtelmischungen zu verwenden, was aber derzeit dem Sinn des Recyclinggedankens nicht entspräche und aus wirtschaftlicher Sicht nicht sinnvoll wäre.

Die erfindungsgemäße Mörtelmischung weist gegenüber dem Stand der Technik die Vorteile auf, dass das die verwendete Körnung (Rest-)Glas neben den geforderten, zum üblichen verwendeten Körnungen aus Stein äquivalenten, physikalischen Eigenschaften noch weitere Eigenschaften aufweist, welche die Herstellung und Verwendung von Mörtel positiv beeinflussen und dessen physikalischen Eigenschaften verbessern (z.B.: Biege-/Zugfestigkeit oder Verzahnungs-/ Haftzugfestigkeit).

Weitere Verbesserungen ergeben sich aus den Merkmalen der Unteransprüche. In einer ersten Ausgestaltung der Erfindung kann vorgesehen sein, dass das Glas aus allen heute verwendeten Einsatzgebieten (z.B.: Behälterglas, Frontglas, Bleiglas, techn. Glasvarianten, usw.) besteht.

Das Glas kann auch klare und / oder opale und / oder farbige Körnungen aufweisen.

Vorteilhafterweise besteht das Glas der Mörtelmischung aus einer gleichanteiligen Mischung von Glassand mit einem Anteil an Mehl- und Feinkorn im Bereich zwischen 50 % und 65 %, vorzugsweise 58 %, sowie einem Überkornanteil im Bereich zwischen 10 % und 20 %, vorzugsweise 14 %, und einem Glassand mit einem Anteil an Mehl- und Feinkorn im Bereich zwischen 35 % und 50 %, vorzugsweise 42 %, sowie einem Überkornanteil im Bereich zwischen 20 % und 30 %, vorzugsweise 24 %.

**Glassand1**

| | | |
|---|---|---|
| • Mehl- und Feinkornanteil | 50 - 65 % | vorzugsweise 58 % |
| • Überkornanteil | 10 - 20 % | vorzugsweise 14 % |

und

**Glassand2**

| | | |
|---|---|---|
| • Mehl- und Feinkornanteil | 35 - 50 % | vorzugsweise 42 % |
| • Überkornanteil | 20 - 30 % | vorzugsweise 24 % |

Der Gipsanteil der Mörtelmischung kann nach DIN EN 13279 Teil 1: 2008-11 unter 50 % oder 50 % und mehr enthalten.

Die Mörtelmischung kann Cellulose mit einem Anteil im Bereich zwischen 0,5 % und 5 % oder mehr, vorzugsweise, 1,38 %, enthalten.
Die Cellulose kommt teilweise in Form von Papier, vorzugsweise Altpapier, aus der Trennung der Etiketten in der Altglasaufbereitung und Fehlwürfe bei den Altglassammlungen.

Die Mörtelmischung kann außerdem Zucker (aus den organischen Reststoffen im Altglas) mit einem Anteil im Bereich zwischen 0,1 % und 0,5 % oder mehr, vorzugsweise 0,3 %, enthalten. Es wurde festgestellt, dass Gips durch einen Anteil an Zucker nicht in seiner Bindefähigkeit oder der Bindegeschwindigkeit nachteilig beeinflusst wird.

Die Mörtelmischung kann weiterhin einen Luftporengehalt von 10 % plus / minus 2 % aufweisen.

Das Glas kann mit einem Anteil an Fett und / oder Öl von 0 % bis 1 % bereitgestellt sein.

Die Erfindung wird nun anhand eines Ausführungsbeispiels näher erläutert. Es zeigen:
- Fig. 1: eine Körnungsverteilung eines ersten Glassandes und
- Fig. 2: eine Körnungsverteilung eines zweiten Glassandes

Der Herstellung der erfindungsgemäßen Mörtelmischungen gingen weitreichende Forschungen mit einer Reihe von Versuchen unter Verwendung verschiedener Bestandteile voraus, wie sie in üblichen Mörtelmischungen verwendet werden. Dazu gehören unter anderem Kalk, Zement und Gips aber auch weitere Bestandteile wie Keramik, Steine, Porzellan und Glas.

Dabei stellte sich heraus, dass die Verwendung von zerkleinertem Restglas, insbesondere hergestellt aus Behälterglas, Vorteile gegenüber den anderen genannten Stoffen aufweist. Die reine Körnung Keramik - Steine - Porzellan (KSP) im Kornbereich bis 4mm kann für den Mörtel ebenfalls verwendet werden.

Für die Versuche wurden Körnungen verwendet, die als Restglas im Rahmen des Altglasrecyclings anfallen. Eine weitere Aufarbeitung des Materials ist für diese Versuche nicht erfolgt. Um eine definierte, für die Verwendung als Körnung für Mörtel ideale, Sieblinie zu erreichen, ist eine hinreichende Siebung erforderlich. Dies ist technisch und mit einem gewissen wirtschaftlichen Mehraufwand möglich.

Damit kann beispielsweise ein fehlender Feinkornanteil bei Glassand 0/2 (also mit einer Körnung vom 0 bis 2 mm) vermieden werden und / oder es kann beim Glassand 0/2 auf diese Weise der Überkornanteil entfernt werden, damit das Material als Körnung für Mörtel verwendbar wird.

Auch wenn in Deutschland das Hauptziel des Altglasrecyclings die Wiederverwendung des Rohstoffes Glas für neue Glasverpackungen ist, sollten auch die für die Glasherstellung bzw. Alternativprodukteherstellung nicht verwendbaren Reststoffe einer sinnvollen Verwendung zugeführt werden. Die in Deutschland nicht verwendeten Reststoffe (Restglas) eignen sich gut zur Herstellung von Mörtel. Neben der Schonung von natürlichen Ressourcen, entfallen auch weitere Transport- und Verwertungs- und Entsorgungskosten und/oder Deponierungskosten für den Reststoff Restglassand. Zur Herstellung einer Mörtelmischung können Glaskörnungen verwendet werden, die in allen Glasbereichen (z.B.: Behälterglas, Frontglas, Bleiglas, techn. Glasvarianten, usw.) hergestellt wurden.

Einer Besonderheit, der in der Praxis große Bedeutung zukommt, ist die Erstarrungs- und Erhärtungsfähigkeit einer Mörtelmischung. Bei der Verwendung von Kalk und Zement als Bindemittel sind diese Fähigkeiten aufgrund der in der erfindungsgemäßen Mörtelmischung verwendeten Stoffe verzögert. Deshalb wird für die erfindungsgemäße Mörtelmischung Gips als Bindemittel verwendet. Die Erstarrung und Erhärtung der Gipsmörtelmischung mit Glassand entspricht dabei dem handelsüblichen Gipsmörtel.

Für die Mörtelmischungen wurde nach DIN EN 13279 Teil 1:2008-11 ein Gipsgehalt von mindestens 50 % gewählt.

Nach DIN EN 1015-11:2007-05 wurden während der Versuche Prismen hergestellten und entsprechend der Norm auf Biegezugfestigkeit und Druckfestigkeit geprüft. Das in Anlehnung an DIN EN 13279 Teil 1: 2008-11 so hergestellte Prisma aus Gipsmörtel, weist nur eine geringe Biegefestigkeit aber eine der Norm entsprechende Druckfestigkeit auf. Daher ist die Verwendung von Glassand als Körnung für Estrichmörtel/ Zementmörtel nicht sinnvoll.

Die Druckfestigkeit der Mörtel mit Glassand erreicht die von den Normen geforderten Werte für gebräuchliche Putz- und Mauermörtel. Die Verwendung von Glaskörnungen in Gipsmörtel ergab weiterhin während der im Zuge der Forschung durchgeführten Versuche keine Beeinträchtigungen der sonst üblichen Mörteleigenschaften. Auch besteht beim Bindemittel Gips keine Gefahr der Alkali-Kieselsäure-Reaktion (AKR). Die Putzmörtel erfüllen alle in den einschlägigen Normen geforderten Eigenschaften.

Kalk- und Zementmörtel werden nach den Vorgaben der DIN 18580: 2017-03 Baustellenmauermörtel hergestellt. Da es eine vergleichbare Norm für Baustellenputzmörtel nicht gibt, wird auf die Normen DIN EN 13279 Teil 1:2008-11, sowie der DIN EN 998 Teil 1: 2017-02 zurückgegriffen.

Insbesondere bei Verwendung von Restglas nach dem Altglas-Recycling müssen zur Herstellung der Körnungen noch weitere Stoffe, welche die Eigenschaften der Mörtelmischung beeinflussen können, betrachtet werden. Den verwendeten Altglas-/Restglasmengen können organische, insbesondere pflanzliche oder tierische Reststoffe (z. B. Fasern, Holz, Zucker, Öle und Fette) sowie künstliche Reststoffe (z.B.: Kunstoffe, Metalle, Gummi, usw.) aus allen möglichen Fehlwürfen in den Altglassammlungen anhaften.

Untersuchungen des aus Verpackungsgläsern hergestellten Glassands anhand eines Glühversuchs nach DIN EN 1744-1: 2013-03, auf die später nochmals eingegangen wird, ergaben Anteile von organischem Material im Bereich zwischen 0,5% und 5 %. Diese Anteile bestehen zum größten Teil aus Cellulosefasern und stammen überwiegend/ vollständig von den Etiketten der Verpackungsgläser. Diese bewirken eine Faserarmierung des Mörtels, der damit eine erhöhte Wiederstandfähigkeit gegen Risse erreicht. Ausreichende Festigkeiten bis CS IV für Putzmörtel können mit handelsüblichen Bindemitteln wie z. B. Gips erreicht werden. Unterstützend können Zusatzmittel eingesetzt werden. Alle Messwerte erreichen die in der DIN EN 998 Teil1 gestellten Anforderungen an die Druckfestigkeit. Die Mindestdruckfestigkeit für Gipsmörtel nach DIN EN 13279 Teil 1:2008-11 beträgt 2,0 N/mm².

Beim Mischen von Mörtel, dessen Mörtelmischung als Körnung Restglas (hier: aus dem Recycling von Altglas/Behälterglas entstandene Reststoff) enthält, ist zu beobachten, dass sich die trockenen Bestandteile schlecht mit dem Zugabewasser mischen. Der Effekt ist vergleichbar mit dem Mischen von hydrophobem Mörtel. Hervorgerufen wird dies durch die Organikanteile (Öle und / oder Fette), auf die später nochmals eingegangen wird und die im Restmaterial nach dem Recyclingvorgang noch immer vorhanden sind. Diese Eigenschaften sind auch nach der Erhärtung des Mörtels zu beobachten.

Die Bestimmung des Zuckergehalts erfolgte mit einem Refraktometer. Es ergaben sich Werte im Bereich zwischen 0,1 % und 0,5 %. Die Prüfung auf humose Bestandteile mit dem Natronlaugenversuch ist nicht mehr genormt. Die Prüfung wurde dennoch durchgeführt, um die Art der Inhaltsstoffe eingrenzen zu können. Daraus ergab sich, dass organische Bestandteile, wie z. B. Humus, nur in unwesentlichen Mengen enthalten sind und die Körnungen somit die Anforderung nach DIN 4226-4: 1983-04 erfüllen.

Es konnte auch Wasser im Glassand nachgewiesen werden, der teilweise von den organischen Bestandteilen stammt aber auch in Form von zwischen den Glaskörnern gebundenem Wasser vorliegt. Der Wassergehalt lag bei den Einzelversuchen dabei im Bereich zwischen 0 % und 2,5 %.

Wenn anstelle von Restglas zur Herstellung der Körnungen noch nicht recyceltes Altglas verwendet wird, können ggf. weitere Additive, die im Restglas wie bereits oben beschrieben vorkommen, wie beispielsweise Cellulose in Form von Papier, vorzugsweise Altpapier aus früheren Etiketten, zusätzlich bereitgestellt werden.

Zur Ermittlung geeigneter Glassande wurden weitere Versuche durchgeführt. Dazu wurden die in der industriellen Recyclingindustrie verwendeten Anlagen betrachtet und die von ihnen erzeugten Glassande mit Hilfe von Siebversuchen analysiert. Dabei lag der Schwerpunkt auf den am häufigsten produzierten Glassanden mit den Körnungsangaben 0/1 und 0/2 mm.

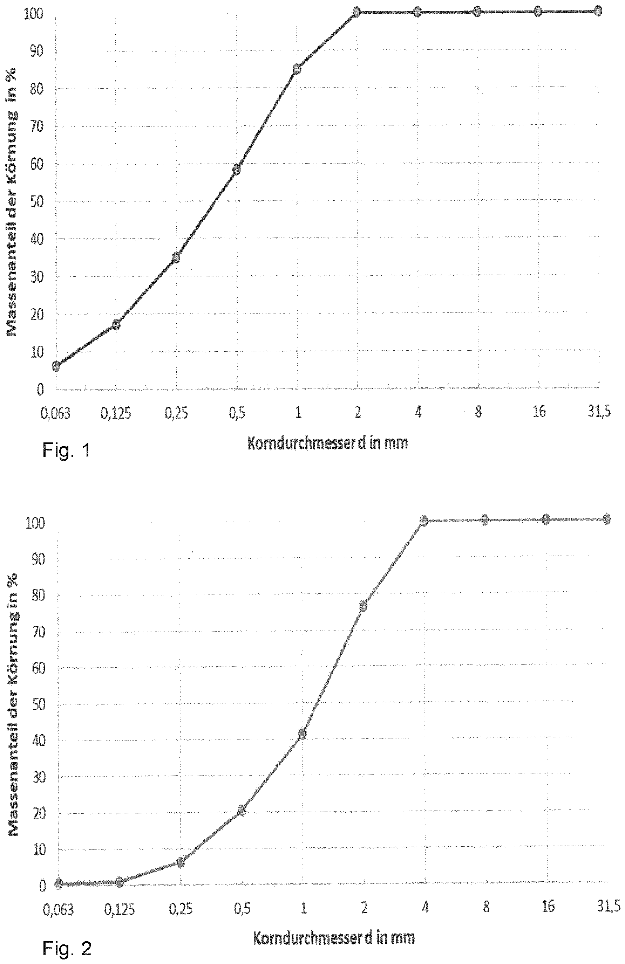

Die Siebversuche mit Glassand 0/1, also mit einer Körnung vom 0 bis 1 mm, (siehe Fig. 1) ergaben einen Überkornanteil im Bereich zwischen 10 % und 20 %, im Mittel von ca. 14 % und einem hohen Fein- und Mehlkornanteil (Korndurchmesser maximal 0,5 mm) im Bereich zwischen ca. 50 % und 65 %, im Mittel von ca. 58 %. Der Glühversuch ergab einen Gehalt an organischen Bestandteilen im Bereich zwischen ca. 1 % und 2,5 %, im Mittel von ca. 1,78 %. Die Prüfung des Zuckergehaltes erfolgte mit einem Refraktometer und ergab einen Wert im Bereich zwischen 0,3 % und 0,5 %, im Mittel von ca. 0,4 %. Beim Mischen mit Wasser verhielt sich das Material wie hydrophober Mörtel und verband sich schlechter mit dem Zugabewasser. Es war bei allen Versuchen eine längere Mischzeit notwendig. Aus diesem Grund ist von einem geringen Gehalt an Ölen und Fetten auszugehen. Dieser wasserabweisende Effekt bleibt nach Erhärtung des Mörtels erhalten. Es handelt sich bei dem verwendeten Glassand um Material, das nicht mehr zur Neuglasgewinnung verwendet werden kann, sondern nur noch u.U. für andere Alternativverwertungen (z.B. Schaumglasindustrie) verwendet werden kann oder einer finalen Entsorgung (Deponie oder thermische Entsorgung) zugeführt werden muss.

Die Siebversuche mit Glassand 0/2 (siehe Fig. 2) erbrachte einen Anteil an Überkorn im Bereich zwischen ca. 20 % und 30 %, im Mittel von ca. 24 %, wobei der Fein- und Mehlkornanteil (Korndurchmesser maximal 1 mm) gering war im Bereich zwischen ca. 35 % und 50 %, im Mittel von ca. 42 %. Dadurch ergab sich eine schlechte Verarbeitbarkeit. Ein mit dieser Körnung gemischter Mörtel ist nicht geschmeidig und haftet schlecht beim Anwerfen. Ebenso ergeben sich Schwierigkeiten beim Scheiben und Glätten. Der mangelnde Feinkorngehalt kann durch Zumischen von Glassand 0/1 ausgeglichen werden. Der Glühversuch ergab einen geringen Anteil organischer Bestandteile im Bereich zwischen ca. 0,5 % und 1,5 %, im Mittel von ca. 0,97 %. Der Zuckergehalt ist so gering, dass er mit dem Refraktometer nicht zuverlässig messbar ist. Ermittelt wurden Werte im Bereich zwischen 0,1 % und 0,3 %, im Mittel von ca. 0,2 %. Der hydrophobe Effekt ist beim Glassand 0/2 in gleicher Weise zu beobachten.

Bei Verwendung von sehr viel Cellulose in Form von Papier bzw. Altpapier, entweder durch gewollte Beimischung oder durch einen hohen Anteil von entsprechendem Kennzeichnungsmaterial auf dem Verpackungsglas, kann der Gehalt an organischen Bestandteilen auch bis zu 5 % oder mehr betragen.

Als bevorzugter Glassand zur Verwendung in einer erfindungsgemäßen Mörtelmischung hat sich eine gleichanteilige Mischung aus dem Glassand 0/1 und dem Glassand 0/2 ergeben. Daraus ergeben sich ein Anteil an Cellulosefasern von ca. 1,38 % und ein Zuckergehalt von ca. 0,3 %.

Bei den Versuchen wurde auch eine Prüfung des Luftporengehalts nach DIN EN 101-7: 1998-12 durchgeführt. Diese ergab bei Putzmörtel mit dem Bindemittel Gips einen Luftporengehalt im Bereich zwischen 9% und 11 %. Dieser Luftporengehalt wurde ohne Verwendung von Zusatzmitteln erreicht. In der Körnung müssen daher Stoffe enthalten sein, welche die Bildung von Luftporen begünstigen. Glas ist ein vorzugsweise porenfreies Material. Mit einer Dichte von durchschnittlich 2,5 g/cm³ liegt diese Körnung in dem Gewichtsbereich von natürlichen Körnungen und kann somit nicht für die geringe Dichte verantwortlich sein. Bei der Herstellung des Mörtels können jedoch Luftporen an den Glaskörnern haften. Dieser Effekt ist bekannt und tritt auch bei der Beimischung von Glasfasern in Beton auf. Er wird ebenfalls beobachtet, wenn Glasfasern in Harze gemischt werden. Der Luftporengehalt der optimalen Glassandmischung liegt bei 10,3 %.

Daraus kann man schließen, dass der Effekt unabhängig vom Bindemittel ist und mit dem Material Glas in Verbindung steht. Möglich ist auch, dass sich Seifen durch vorhandene Fette und Öle bei einer chemischen Reaktion mit Laugen bilden. Ein hoher Luftporenanteil im Mörtel hat den Nachteil, dass die Druckfestigkeit sinkt. Im Gegenzug dazu verbessert sich die Verarbeitungsfähigkeit des Mörtels. Weiterhin wird die Wärmedämmung des ausgehärteten Mörtels verbessert. Der hohe Luftporenanteil ist nicht grundsätzlich ein Nachteil. Luftporen werden bewusst erzeugt, um beispielsweise die kapillare Saugfähigkeit des Festmörtels zu reduzieren oder um Raum für die Kristallisation von Sulfaten in Sanierputzen zu erzeugen.

Nach DIN EN 998-2: 2017-02, Kap.5.4.8: Brandverhalten, müssen Baustoffe, die einen Gehalt von organischen Massen- oder Volumenanteilen über 1 % haben, nach DIN EN 13501-1: 2010-01 klassifiziert werden. Glassand 0/1 liegt mit 1,73 % über diesem Wert und muss klassifiziert werden. Glassand 0/2 liegt mit 0,97 % knapp darunter. Eine Klassifizierung ist bei dieser Körnung nicht notwendig. Sollen die Körnungen gemischt werden, wird jedoch eine Klassifizierung notwendig, da der Glassand 0/2 nur knapp unter der Grenze zur Klassifizierung liegt.

Es konnte in den Versuchen außerdem nachgewiesen werden, dass die aufgefundenen Fremdstoffe (z. B. Cellulose, Zucker, Humus) keine nachteiligen Wirkungen bei der Erstarrungs- und Erhärtungsdauer von Gipsmörtel haben

Die Oberflächenbearbeitung entspricht der von Mörtel mit natürlichen Körnungen. Im gestalterischen Bereich ergeben sich hier völlig neue Perspektiven. Es lassen sich zusätzlich einzigartige Effekte bei der Oberflächengestaltung erreichen, die bei Verwendung von natürlichen Körnungen nicht möglich sind. Dabei ist auch die Mischung verschiedenfarbiger Körnungen möglich. Beispielsweise lassen sich besondere Effekte mit farblich sortierten Körnungen erreichen, die mit üblichem Putzmörtel nicht erreichbar sind. Da in Deutschland Recyclingglas meist farblich gut vorsortiert wird, ist die Gewinnung von klaren, opalen, braunen, grünen und blauen bzw. allgemein farbigen Körnungen einfach möglich.

Die Verarbeitbarkeit der mit der erfindungsgemäßen Mörtelmischung hergestellten Mörtel entsprach dem von herkömmlichem Mörtel mit Gesteinskörnungen. Entsprechend der Körnung und der Sieblinie ließen sich gefilzte und geglättete Oberflächen erreichen.

## Patentansprüche

1. Mörtelmischung beinhaltend ein anorganisches mineralisches Bindemittel, eine anorganische Körnung und ein organisches Additiv,
**dadurch gekennzeichnet,**
**dass** das Bindemittel Gips, Kalk oder Zement ist,
**dass** die Körnung zerkleinertes Glas ist und
**dass** das Additiv Cellulose ist.

2. Mörtelmischung nach Anspruch 1,
**dadurch gekennzeichnet,**
**dass** das Glas aus Glas jeglicher Art und / oder Alt- bzw. Restglas besteht.

3. Mörtelmischung nach einem der vorhergehenden Ansprüche,
**dadurch gekennzeichnet,**
**dass** das Glas klare und / oder opale und / oder farbige Körnungen aufweist.

4. Mörtelmischung nach einem der vorhergehenden Ansprüche,
**dadurch gekennzeichnet,**
**dass** das Glas aus einer gleichanteiligen Mischung von Glassand mit einem Anteil an Mehl- und Feinkorn im Bereich zwischen 50 % und 65 %, vorzugsweise 58 %, sowie einem Überkornanteil im Bereich zwischen 10 % und 20 %, vorzugsweise 14 %, und einem Glassand mit einem Anteil an Mehl- und Feinkorn im Bereich zwischen 35 % und 50 %, vorzugsweise 42 %, sowie einem Überkornanteil im Bereich zwischen 20 % und 30 %, vorzugsweise 24 %, besteht.

5. Mörtelmischung nach einem der vorhergehenden Ansprüche,
**dadurch gekennzeichnet,**
**dass** der Gipsanteil nach DIN EN 13279 Teil 1:2008-11 festgelegt wird.

6. Mörtelmischung nach einem der vorhergehenden Ansprüche,
**dadurch gekennzeichnet,**
**dass** sie Cellulose mit einem Anteil im Bereich zwischen 0,5 % und 5 %, vorzugsweise 1,38 %, enthält.

7. Mörtelmischung nach einem der vorhergehenden Ansprüche,
**dadurch gekennzeichnet,**
**dass** die Cellulose zumindest teilweise in Form von Papier, vorzugsweise Altpapier, bereitgestellt ist.

8. Mörtelmischung nach einem der vorhergehenden Ansprüche,
**dadurch gekennzeichnet,**
**dass** sie Zucker mit einem Anteil im Bereich zwischen 0,1 % und 0,5 %, vorzugsweise 0,3 %, enthält.

9. Mörtelmischung nach einem der vorhergehenden Ansprüche,
**dadurch gekennzeichnet,**
**dass** sie einen Luftporengehalt von 10 % plus / minus 2 % aufweist.

10. Mörtelmischung nach einem der vorhergehenden Ansprüche,
**dadurch gekennzeichnet,**
**dass** das Glas mit einem Anteil an Fett und / oder Öl bereitgestellt ist.
